# EUROPEAN PATENT APPLICATION

(11) **EP 2 413 034 A2**
(43) Date of publication of application: **01.02.2012**
(21) Application number: 11174297.9
(22) Date of filing: 18.07.2011
(51) Int. Cl.: F23J 15/00, F23J 15/06, F25J 3/06

(54) **Systems and methods for CO2 capture**

(30) Priority: 30.07.2010 US 847954
(71) Applicant: General Electric Company, Schenectady, NY 12345 (US)
(72) Inventor: Kulkarni, Parag Prakash, Niskayuna, NY 12309 (US); Hofer, Douglas Carl, Niskayuna, NY 12309 (US); Joshi, Narendra Digamber, Niskayuna, NY 12309 (US)
(74) Representative: Gray, Thomas

(57) **Abstract**

The present disclosure relates to the separation of CO₂ (12) from a gas mixture (16). The CO₂ (12) may be removed by cooling the gas mixture (16) such that the CO₂ (12) can be removed as a solid or liquid. In various embodiments the gas mixture (16) from which the CO₂ (12) is removed may include exhaust gases generated as part of a combustion process, such as may be employed in a power generation process, though the gas mixture (16) may be any gas mixture (16) that includes CO₂ (12).

## Description

### BACKGROUND OF THE INVENTION

The subject matter disclosed herein relates to systems and methods for separating CO₂ and/or other gaseous species from a gas mixture, such as a gas mixture resulting from a combustion process.

Power generating processes that are based on combustion of carbon containing fuel produce carbon dioxide (CO₂) as a byproduct. Typically the CO₂ is one component of a mixture of gases that result from or pass unchanged through the combustion process. It may be desirable to capture or otherwise remove the CO₂ and/or other components of this gas mixture to prevent the release of these gases into the environment and/or to utilize these gases in the power generation process or in other processes.

Unfortunately, CO₂ capture (as well as the capture of other gaseous combustion byproducts) can be energy intensive as well as capital intensive. For example, amine processes used to capture CO₂ may require installation of the capital equipment associated with the amine system (which may result in an 80% increase in the cost of the system) and may be costly and energy intensive to operate. Further, to the extent that the captured CO₂ is compressed, the energy and capital requirements may be increased even further. In addition, such CO₂ capture processes are typically associated with substantial water usage (i.e., a large water footprint). As a result, these capture and removal processes may be expensive and/or infeasible to perform using existing technologies.

### BRIEF DESCRIPTION OF THE INVENTION

With the foregoing background in mind, the present disclosure describes a cryogenic CO₂ separation method that relies on the principle of cooling the gas mixtures to separate CO₂ as liquid or solid and thus making it easier to separate from other gas mixtures.

In a first embodiment, a power-generating system is provided. The power-generating system includes a CO₂ separation system comprising an inlet that receives a gas mixture generated by a combustion process. The power-generating system also includes one or more cooling stages that cool the gas mixture such that solid or liquid-phase CO₂ separate out from the gas mixture to produce a substantially CO₂ free gas mixture and one or more separation components that remove the solid or liquid-phase CO₂ once it is separated from the gas mixture.

In a second embodiment, a power-generation system is provided. The power-generation system includes a boiler configured to generate heat. The power-generation system also includes one or more cooling stages that cool an exhaust gas exiting the boiler such that one or more constituents of the exhaust gas undergo a phase change and drop out of the exhaust gas. One of the constituents that drop out of the exhaust gas is solid or liquid CO₂. The power-generation system also includes a separation component configured to separate the solid or liquid CO₂ from the exhaust gas, leaving a substantially CO₂ free gas mixture.

In a third embodiment, a combined cycle system is provided. The combined cycle system includes a turbine cycle configured to combust a fuel and air to generate an exhaust gas that passes through one or more turbine components. The combined cycle system also includes a steam cycle configured to utilize heat of the exhaust gas to cause the flow of water or steam through a circuit. The combined cycle system also includes a CO₂ separation system configured to cryogenically separate CO₂ from the exhaust gas to generate a substantially CO₂ free gas mixture.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a flowchart depicting steps in the removal of CO₂ from a gas mixture in accordance with aspects of the present disclosure;
FIG. 2 is a block diagram of a turbine system in accordance with aspects of the present disclosure;
FIG. 3 is a block diagram of a system for processing a gas mixture to remove CO₂ in accordance with aspects of the present disclosure;
FIG. 4 is a block diagram of one embodiment of a power generation system including CO₂ separation in accordance with aspects of the present disclosure;
FIG. 5 is a block diagram of a second embodiment of a power generation system including CO₂ separation in accordance with further aspects of the present disclosure;
FIG. 6 is a block diagram of a further embodiment of a power generation system including separation of CO₂ as a liquid in accordance with further aspects of the present disclosure;
FIG. 7 is a block diagram of one embodiment of a turbine-based system including CO₂ separation in accordance with aspects of the present disclosure;
FIG. 8 is a block diagram of a second embodiment of a turbine-based system including CO₂ separation in accordance with further aspects of the present disclosure;
FIG. 9 is a block diagram of an air drying system in accordance with further aspects of the present disclosure;
FIG. 10 is a block diagram of a third embodiment of a turbine-based system including CO₂ separation in accordance with further aspects of the present disclosure;
FIG. 11 is a block diagram of a fourth embodiment of a turbine-based system including CO₂ separation in accordance with further aspects of the present disclosure; and
FIG. 12 is a block diagram of a fifth embodiment of a turbine-based system including CO₂ separation in accordance with further aspects of the present disclosure.

### DETAILED DESCRIPTION OF THE INVENTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

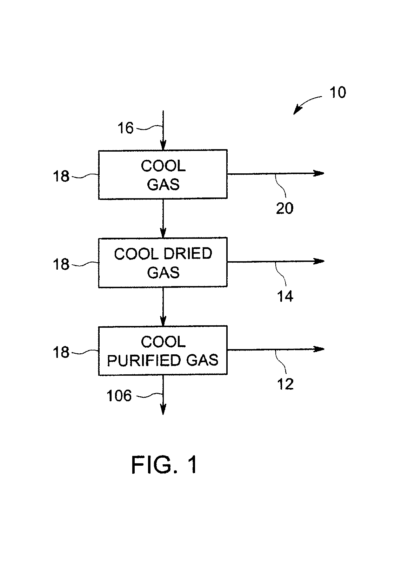

The present disclosure provides for the cryogenic separation (method 10) of CO₂ 12 and/or sulfur species 14 from a gas mixture 16, as depicted in FIG. 1. As discussed herein, the gas mixture 16 may be a flue gas or other exhaust gas mixture resulting from a combustion process (such as may be associated with a coal or natural gas fired power plant), a syngas generated by a gasification or reforming plant, natural gas extracted from a well, or any other gas mixture that contains CO₂ or other gas components where separation is warranted.

In certain embodiments, the gas mixture 16 is cooled (block 18), such as below the typical stack temperatures and, in response to the cooling, drop out water 20, other impurities or pollutants 14, and CO₂ 12 sequentially. Various impurities or pollutants 14 that may be removed or reduced by the approaches discussed herein include, but are not limited to SO₂, NO, NO₂, C₂Hₓ, H₂S unburnt hydrocarbons (UHC), mercury particulates, and arsenic, and so forth. The cooling may be achieved by various suitable approaches, such as an external vapor compression cycle or by expansion of the gas mixture. The CO₂ 12 can be condensed as a liquid or as a solid, depending on the operating pressure and/or temperature, and may be initially separated out from the gas mixture 16 using a suitable separation device, such as a vapor-solid separator, or a vapor-liquid separator (e.g., a filter, cyclone, column packed with inert substance, and so forth). In embodiments where the CO₂ 12 is separated in a solid form, the CO₂ 12 may be compressed and/or heated (such as in a posimetric pump or screw compressor) to achieve a phase change to liquid CO₂ 12. The liquid CO₂ 12 can then, in certain embodiments, be pumped at high pressure (e.g., approximately 150 bar) such as may be used for carbon sequestration. Further, in certain implementations, the separated CO₂ 12 may be used to improve the efficiency of the overall process through one or more recuperative cooling processes.

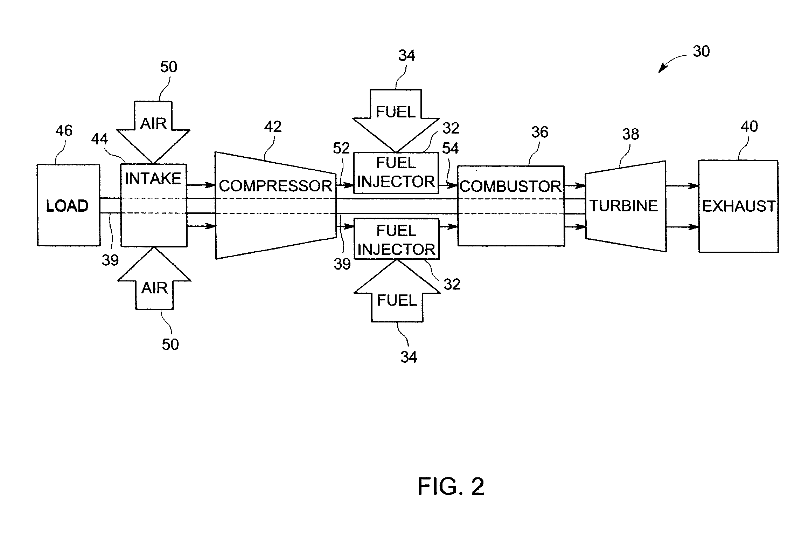

With the foregoing in mind and turning now to the drawings, FIG. 2 is a block diagram of a turbine system 30, such as may be used to generate power. As will be appreciated, the turbine system 30 may be suitable for use in a large-scale facility, such as a power plant for generating electricity that is distributed via a power grid to a city or town, or in a smaller-scale setting, such as part of a vehicle engine or small-scale power generation system. That is, the turbine system 30 may be suitable for a variety of applications and/or may be scaled over a range of sizes.

In the depicted example, the turbine system 10 includes a fuel injector 32, a fuel supply 34, and a combustor 36. The fuel supply 34 may vary, depending on the embodiment, and may correspond to mechanisms suitable for delivering a fuel or fuel mixture, (e.g., a liquid fuel and/or gas fuel, such as natural gas or syngas) to the turbine system 10 through the fuel injector 32 into the combustor 36. As discussed below, the fuel injector 32 is configured to inject and mix the fuel with compressed air. Alternatively, the fuel supply 34 may be suitable for delivering coal or other solid and/or particulate fuel materials to the combustor 36 via a suitable fuel injector 32. The combustor 36 ignites and combusts the fuel-air mixture, and then passes hot pressurized exhaust gas into a turbine 38. As will be appreciated, the turbine 38 includes one or more stators having fixed vanes or blades, and one or more rotors having blades which rotate relative to the stators. The exhaust gas passes through the turbine rotor blades, thereby driving the turbine rotor to rotate. Coupling between the turbine rotor and a shaft 39 will cause the rotation of the shaft 39, which is also coupled to several components throughout the turbine system 10, as illustrated. Eventually, the exhaust of the combustion process may exit the turbine system 10 via an exhaust outlet 40.

A compressor 42 includes blades rigidly mounted to a rotor which is driven to rotate by the shaft 39. As air passes through the rotating blades, air pressure increases, thereby providing the combustor 36 with sufficient air for proper combustion. The compressor 42 may intake air to the turbine system 10 via an air intake 44. Further, the shaft 39 may be coupled to a load 46, which may be powered via rotation of the shaft 39. As will be appreciated, the load 46 may be any suitable device that may use the power of the rotational output of the turbine system 10, such as a power generation plant or an external mechanical load. For example, the load 46 may include an electrical generator, a propeller of an airplane, and so forth. The air intake 44 draws air 50 into the gas turbine system 10 via a suitable mechanism, such as a cold air intake. The air 50 then flows through blades of the compressor 42, which provides compressed air 52 to the combustor 36. In particular, the fuel injector 32 may inject the compressed air 52 and fuel 34, as a fuel-air mixture 54, into the combustor 36. Alternatively, the compressed air 52 and fuel 34 may be injected directly into the combustor for mixing and combustion.

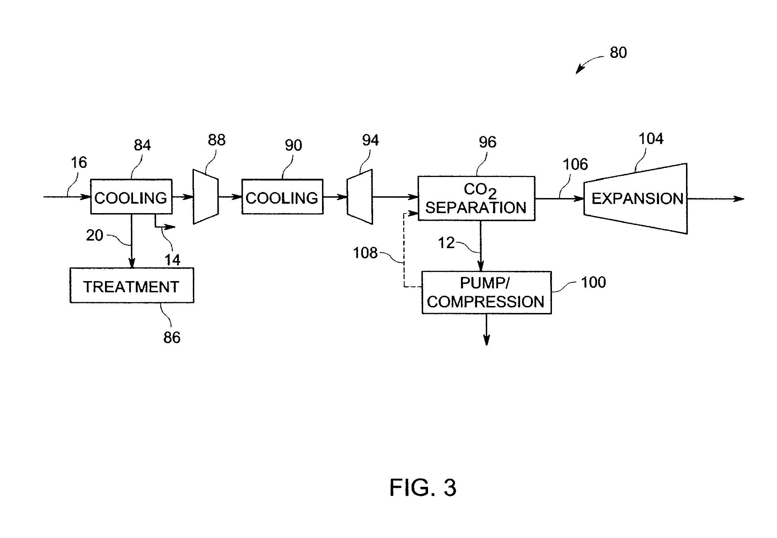

With the foregoing in mind, an example of a system 80 for treating the gas mixture 16 exiting the turbine system 30 is depicted in FIG. 3. In accordance with this example, the gas mixture 16 may be a flue gas from a power generation plant. In such an embodiment, the flue gas may have 10%-15% moisture content and a temperature of approximately 200°F (i.e., approximately 93°C) upon entering the system 80. The gas mixture 16 may be initially cooled (block 84), such as by a heat exchanger, such that some or all (e.g., 50% to 100%) of the water 20 is removed from the gas mixture 16. The removed water 20 may undergo subsequent treatment (block 86) and/or may be utilized in the overall process, such as being introduced as part of a steam cycle or coolant loop associated with the power generation process.

In one embodiment, the gas stream leaving the cooling block 84 is a**t** about -10C to - 30C such that additional water 20 and/or impurities 14 are removed from the gas mixture. This gas stream may, in the depicted example, undergo compression, such as in compressor 88, after which the temperature may increase, such as to about 200° F to about 500° F (i.e., about 93° C to about 260° C). This gas stream may subsequently be cooled again (block 90), by a heat exchanger or other suitable cooling mechanism. In one embodiment, the cooled gas mixture is at about -30C to -80C. The gas mixture may undergo expansion, such as in a turbine 9**4** where work is extracted, and may exit the expansion process at a reduced temperature, e.g., about - 80c to -135 C. At these temperatures and at partial pressures of CO₂ below 5.2 bar the CO₂ may be in a solid phase, while at partial pressures of CO₂ above 5.2 bar the CO₂ may be in a liquid phase. The liquid or solid-phase CO₂ 12 may **b**e separated out (block 96) such as by a sweeping solid particles in a settling tan**k** or by using a suitable separation device, such as a cyclone or vapor liquid separator. In embodiments where the CO₂ 12 is separated in a solid form, the **C**O₂ 12 may be compressed (block 100) (such as in a posimetric pump or screw compressor) to achieve a phase change to liquid CO₂.

In certain embodiments, the CO₂ 12 may be recycled (i.e., recirculated), as depicted by line 108 and used to improve the freeze process efficiency and thereby increase CO₂ concentration. In other embodiments, liquid CO₂ recovered by the processes discussed herein may be used as a working fluid in a bottoming cycle. In one such embodiment where the liquid CO₂ is used as a working fluid, the exhaust from a heat recovery steam generator (HRSG) may be used as a heat source with respect to the CO₂ and the cooled exhaust air from a condenser as may be used as a heat sink with respect to the CO₂. That is, in such an embodiment different respective aspects of the process that undergo complementary heating and cooling may be thermally integrated. For example, as depicted in FIG. 3 and other embodiments, heat generated as a byproduct of one or more of the cooling and/or CO₂ separation stages may be removed by and used to heat the separated CO₂ to turn a portion of this CO₂ from a solid to a liquid, thereby facilitating cooling at the cooling stage (by removing unwanted heat) and liquefaction of the solid CO₂. In such an embodiment, energy consumption of the process may be reduced. Further, the separated CO₂ may be used to enhance aspects of the power generation process (such as providing cooling), and/or used for other processes, such a carbonation or to enhance oil recovery in from existing wells.

In certain embodiments, the remaining gas mixture 106 is a CO₂ lean, dry exhaust gas (i.e., an exhaust gas that is substantially free or reduced in water and CO₂, as well as SO₂ in certain embodiments) which may consist primarily of N₂. In addition, the remaining gas mixture 106 will also typically be reduced in O₂ content. As discussed herein, the remaining gas mixture 106 may be utilized for a variety of purposes within the power generation system. For example, the remaining gas mixture 106 may be used as a desiccant to dry air going into a gas turbine engine or coal fired burner involved in the power generation process. Likewise, the remaining gas mixture 106 may be used directly as an input to the combustion process (i.e., fed to the turbine or burner in conjunction with ambient air) to reduce the O₂ content in the air, thereby reducing NOx emissions.

Further, to the extent that the remaining gas mixture 106 is a suitable temperature, it may be used to cool one or more parts of the power generation syste**m**. **F**or example, in certain embodiments CO₂ lean, cold gas may be used to cool the inlet air provided to the combustion process, to dump heat from cooling water, to tre**a**t high pressure steam before sending the steam to an expander for electricity generatio**n**, and so forth.

Further, the remaining gas mixture 106, if under pressure, may be expanded (block 104) to extract additiona**l** work. For example, in implementations where the remaining gas mixture 106 is at 1.5 to 5 bar of pressure or greater, an expansion may be performed to extract additional work. In one such embodiment, the remaining gas mixture 106 may be provi**d**ed to an expander at about -30 to -80 C and at a pressure above ambient. After expansion (and work extraction), the remaining gas mixture may be at about - 70 to -130 C and ambient air pressure. Conversely, in embodiments where the remaining gas mixture 106 is less than 1.5 bar of pressure, the expansion step may be omitted.

With the foregoing in mind, specific examples and embodiments are provided to further discussion. It should be appreciated that the provided examples are intended to illustrate certain of the possible implementations and are not intended to limit the scope of the present disclosure. As will be appreciated, the present approaches may be applicable to the separation of CO₂ (or other gaseous components) from a gas mixture in a variety of different contexts, including contexts other than those discussed herein.

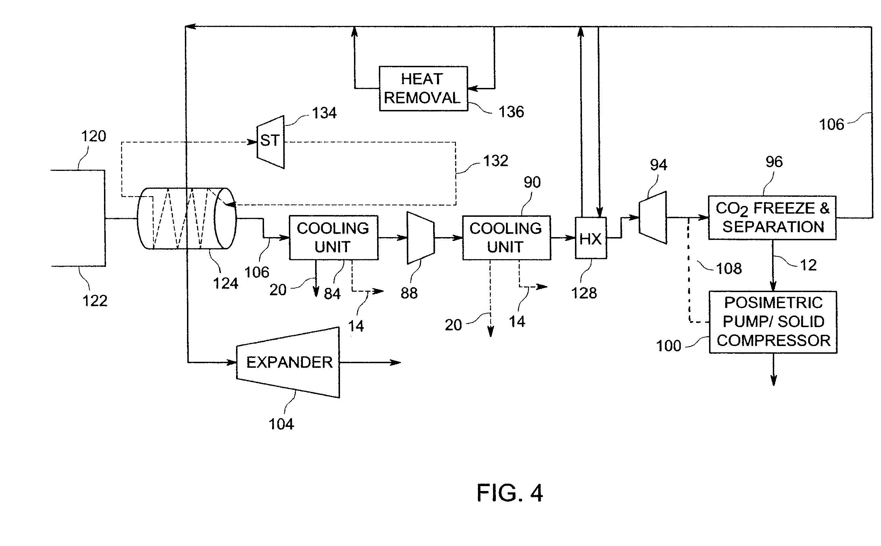

Turning now to FIG. 4, an example is depicted of a CO₂ separation system used in conjunction with a boiler, such as a high-pressure boiler, that may be used in a power plant. For example, the boiler may be a coal-fired or other combustion boiler for use in a power generation plant or system. In one such embodiment, flue-gas desulfurization (FGD) components typically present in the system may be replaced by heat exchangers used in the present cryogenic approach. In such an approach, SO₂ as well as CO₂ will be removed by cryogenic processes as opposed to those processes typically used in flue-gas desulfurization. In this example, air 120 and fuel 122 (e.g., coal) are introduced into a boiler 124, where the air 120 and fuel 122 are combusted. As a byproduct of this combustion process, a gas mixture 106 (e.g., flue gas) exits the boiler 124. In other embodiments, the boiler 124 may be a heat recovery steam generator (HRSG) used in a process in which CO₂ containing hot gases (such as exhaust gases) are used to generate steam or provide process heat. In such embodiments the CO₂ containing hot gases that provide heat to the HRSG may be processed in accordance with the approaches discussed herein.

The gas mixture 106 is cooled (block 84), such as using a heat exchanger, and some or all of the water 20 drops out. In certain embodiments, other impurities, such as SO₂ 14, may also be completely or partially removed at this stage. As discussed above, the water 20 may be treated and/or used in the power generation process, such as in the water circuit discussed below. The gas mixture 106 may pass through a compressor 88 before being cooled (block 90), such as via a heat exchanger. In this cooling step additional water 20 and/or impurities (e.g., SO₂ 14), if present, may be removed. However, as will be appreciated, both the water 20 and SO₂ 14 components of the gas mixture may be removed prior to the gas mixture 106 undergoing compression at compressor 88.

In the depicted example the gas mixture may pass through a heat exchanger 128, such as an air-to-air heat exchanger, before undergoing expansion (block 94), such as in a turbine where work is extracted. In one embodiment, the heat exchanger 128 may reduce the temperature of the gas mixture 16 to less than 32° F (i.e., less than 0° C) before undergoing expansion at block 94. After exiting the expansion step, the CO₂ 12 may be in a liquid or solid phase, and thus may, in one implementation, be mechanically separated out (block 96). For example, in one embodiment the solid phase CO₂ 12 may be separated out from the gas mixture 16 by a cyclone-type device. The solid-phase CO₂ may then be compressed (block 100) such as by a posimetric pump or a solid compressor, so that the CO₂ enters a liquid phase which may be pumped.

In the depicted embodiment, the remaining gas mixture 106 (such as an N₂ gas mixture) is cold and dry, such as at about -100° F (i.e., about -74° C). This remaining gas mixture 106 may be used to remove heat from a cooling water circuit (depicted by dotted lines 132) that removes heat from the boiler 124 and drives a steam turbine 134. For example, the remaining gas mixture 106 may be used in a condenser 136 or other heat removal mechanism to cool the water or other coolant in the cooling circuit 132. Upon removing heat from the cooling circuit, the remaining gas mixture 106 may be at a temperature of about 100° F (i.e., about 37° C).

In one embodiment, the remaining gas mixture 106 may be further used to cool the boiler 124. In such an embodiment, the remaining gas mixture absorbs rejected or radiated heat from the boiler 124, heating the remaining gas mixture 106 to about 300° F to about 500° F (i.e., about 148° C to about 260° C). The heated remaining gas mixture 106 may then be expanded (block 104), such as via a turbine, to extract additional work.

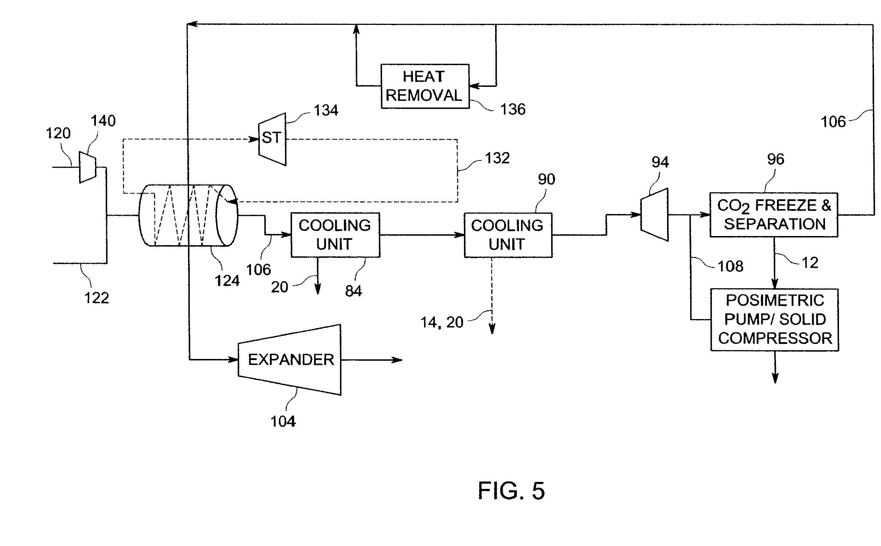

Turning to FIG. 5, in certain embodiments it may useful to condense the CO₂ directly from the gas mixture as a liquid, as opposed to a solid, thereby avoiding mechanical separation of the solid CO₂ and pressurization or compression of the solid CO₂ to a liquid form. Such embodiments may be implemented by maintaining the gas stream at a suitably high pressure.

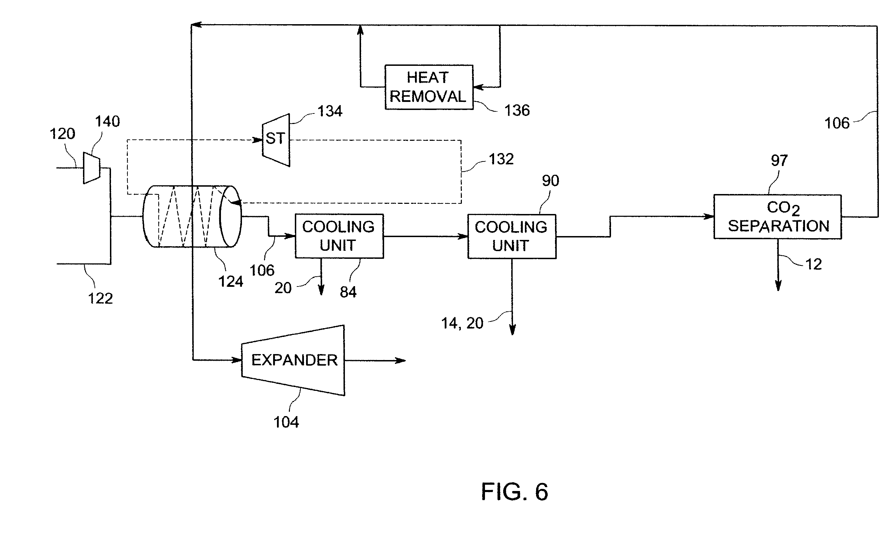

For example, in one such embodiment air 120 is introduced to the boiler 124, such as a high pressure boiler, at increased pressure, such as by operation of a compressor 140. By performing the combustion at higher pressure, flue gas compression may be avoided or reduced. For example, flue gas may be kept above or near the triple-point of CO₂ such that the CO₂ can be subsequently condensed as a solid instead of a liquid. In one such example, the air 120 may be introduced to the boiler 124 at increased pressure, so that the compression step between the first and second cooling steps may be omitted and, likewise, the heat exchanger operation prior to the expansion step 94 of FIG. 4 may be omitted. Further, as depicted in FIG. 6, the system of FIG. 5 may be further modified to omit the expansion step 94. In one such embodiment, CO₂ 12 may be collected in a liquid phase at a CO₂ separation stage 97.

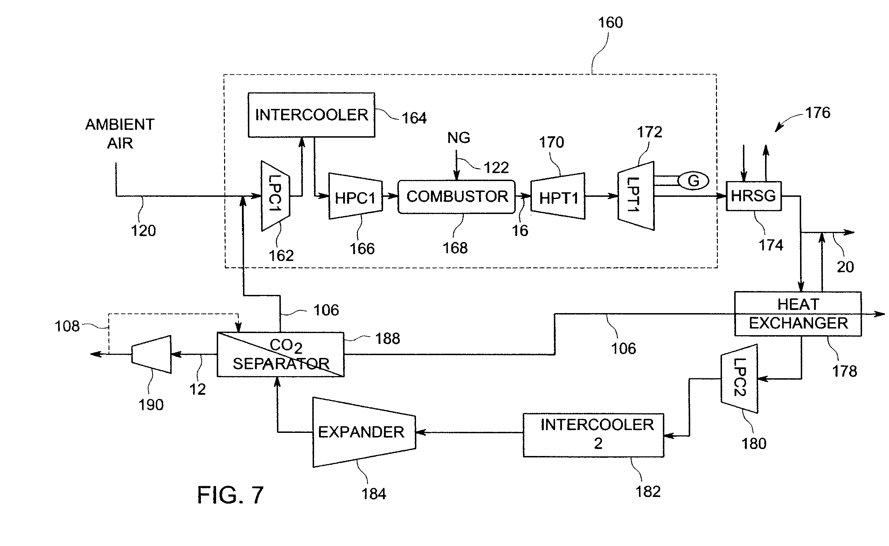

In FIG. 7 an alternative embodiment is depicted in the context of an air cycle machine for CO₂ capture in the context of a natural gas combined cycle. As will be appreciated, such an implementation may also be used in the context of other fuel types. In the depicted example, discussion of certain aspects may be omitted to focus on those aspects related to CO₂ separation and/or capture.

For example, turning to FIG. 7, a gas turbine engine 160 is depicted to which air 120 is provided at ambient temperature and pressure for combustion. In the depicted embodiment, the air 120 initially enters a low pressure compressor 162 which compresses the air 120, thereby increasing the temperature of the air, such as to about 300° F (i.e., about 148° C). In the depicted example, the air 120 may then pass through an intercooler 164 which reduces the temperature of the air 120, such as to about 120° F (i.e., about 48° C). The cooled air 120 may then be passed though a high pressure compressor 166, after which the air temperature may be about 750° F (i.e., about 398° C). The compressed air 120, along with a fuel stream 122, may then enter a combustor 168 where the air 120 and fuel 122 are combusted. The exhaust gas mixture 16 produced by the combustion process may pass through one or more turbines, such as high pressure turbine 170 and/or low pressure turbine 172 which act to generate power. Upon exiting the gas turbine engine 160, the gas mixture 16 may be about 800° F to about 1,100° F (i.e., about 426° C to about 593° C). The gas mixture 16 may pass through a heat exchanger, such as the depicted heat recovery steam generator (HRSG) 174 that includes a water/steam cycle 176 that acts to cool the gas mixture 16 and recover heat energy that may be used to perform additional work. For example, the steam cycle interfaced by the HRSG 174 may include a steam turbine power plant drive by the heat generated by the gas turbine engine 160.

Upon exiting the HRSG 174 (or other heat exchanger), the temperature of the gas mixture 16 is reduced, such as to about -10C and a portion of the water 20 may drop out as a liquid. The gas mixture 16 may be further cooled upon passage through a heat exchanger 178, which may lower the temperature of the gas mixture 16 to about - 30C, thereby forcing some or all of the remaining water 20 out of the gas mixture 16. In the depicted example, the gas mixture 16 may pass through a second low pressure compressor 180 where the gas mixture 16 is pressurized, thereby increasing the temperature, such as to about 300° F to about 400° F (i.e., about 148° C to about 204° C). The compressed gas mixture 16 may then pass through a second intercooler 182 where the temperature of the gas mixture is lowered, such as to about -30 to -80C. In one embodiment, external refrigeration may be employed to achieve this additional cooling. The gas mixture 16 may then undergo an expansion (block 184) where work may be extracted after which the remaining gas mixture 106 may be at a temperature of -70 to -130 C and the CO₂ 12 may be in a liquid or solid phase suitable for separation (block 188) from the gas mixture, such as by a suitable separation mechanism (i.e., settling tanks with sweeps, cyclones, and so forth). In the depicted implementation, the separated CO₂ is in a solid phase and is compressed (block 190), such as by a posimetric pump and/or solid compressor, to yield a liquid phase CO₂ product.

The remaining gas mixture 106, which may be primarily dry N₂, may be used to cool the air inlet of the gas turbine engine 160 or as an input to the gas turbine engine 160 to improve the efficiency of the system and to reduce the formation of NOx (e.g., NO, NO₂, and so forth) in the combustion process. In addition, the remaining gas mixture 106 may be used to cool one or more of the heat exchanger components of the system, such as the heat exchanger 178 used to cool the gas mixture 16 upon exiting the HRSG 174.

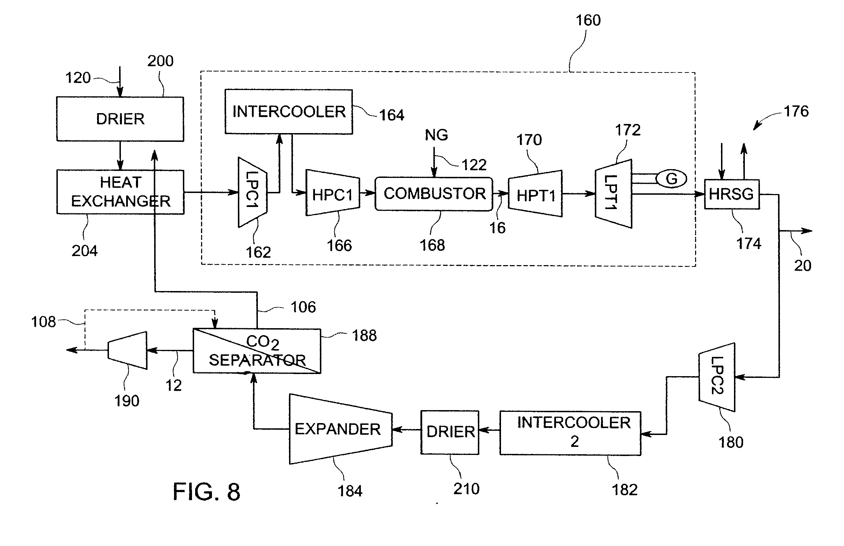

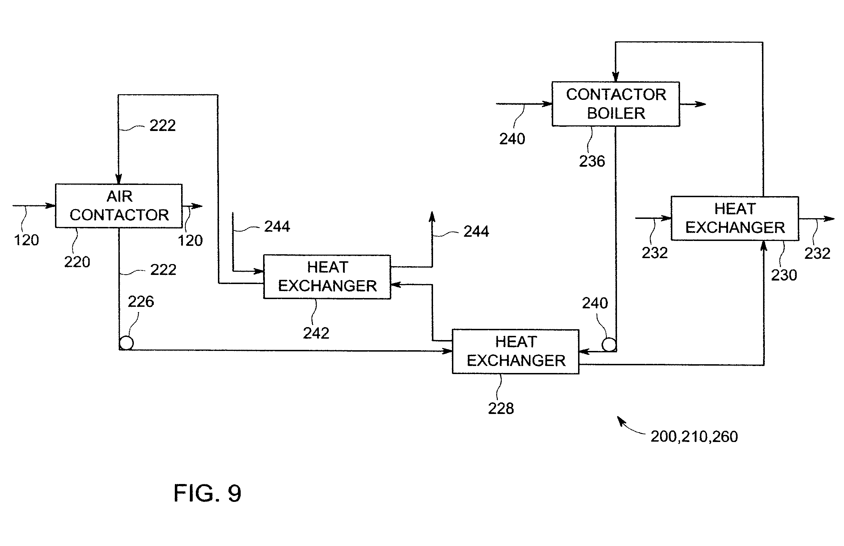

Turning to FIGS. 8 and 9, a further embodiment of an approach to CO₂ capture which utilizes an air drying system is depicted in FIG. 8. An example of a suitable air drying system is depicted in FIG. 9 for reference. In the depicted system of FIG. 8, the ambient air 120 is initially dried, such as by a desiccant air drying system 200, and cooled, such as by heat exchanger 204, before being provided to the gas turbine engine 160. In one such embodiment, the air 120 leaving the heat exchanger 204 and entering the gas turbine engine 160 is at about -10° F to about -20° F (i.e., about -23° C to about -29° C). Such cooled air should be relatively dense relative to air at ambient temperature and thus may provide an increase in power generated by the gas turbine engine 160. As discussed with respect to FIG. 7, the air 120 is combusted with fuel 122 in the gas turbine engine 160. In one embodiment, the exhaust gas mixture 16 leaving the gas turbine engine is at about 800° F (i.e., about 426° C) before entering the HRSG 174, where the gas mixture is further cooled such that some or all of the water 20 drops out in liquid form.

In the depicted embodiment, the gas mixture 16 is compressed in a low pressure compressor 180 and subsequently cooled by an intercooler 182. In the depicted implementation, the gas mixture 16 is also passed through a second air drying system 210 before undergoing expansion (block 184) where work may be extracted. As discussed with respect to FIG. 7, upon being expanded, the gas mixture may be at a temperature and pressure where the CO₂ is in a solid or liquid form and amenable to separation (block 188) from the gas mixture, such as by mechanical or other suitable approaches. In the depicted embodiment, the remaining gas mixture 106, which may be at about -70 C to -130 C may be used to cool the heat exchanger 204 (which may form part of the air inlet of the gas turbine engine 160) through which air 120 passes to enter the gas turbine engine 160 and/or to cool one or more of the disclosed intercoolers. In certain embodiments, as discussed above, to the extent the separated CO₂ 12 is in a solid phase, the CO₂ may be compressed (block 190), such as using a posimetric pump or solid compressor, to a liquid phase.

With respect to FIG. 9, an example of a desiccant air drying system, such as depicted at blocks 200 and 210 of FIG. 8, is depicted in greater detail. In this example, air 120 passes through an air contactor 220 where the air 120 comes in contact with a suitable desiccant material 222 that circulates through the air contactor 220. In one embodiment, the desiccant material 222 is a liquid desiccant, such as a salt solution (e.g., lithium bromide, calcium chloride, lithium chloride, and so forth) or other suitable desiccant. In one such implementation, the desiccant 222 enters the air contactor 220 at about 60° F (i.e., about 15° C) but is heated while in contact with the air 120. In the air contactor 220, moisture from the air 120 is absorbed by the desiccant material 222, thereby drying the air 120 and increasing the water content of the desiccant 222. In the depicted embodiment, the dried air 120 proceeds to a subsequent process stage (such as the heat exchanger 204 or expander 184 of FIG. 8).

The desiccant 222, after contacting the air 120, is increased in temperature (such as to about 75° F (i.e., about 23° C) and water content. The desiccant 222 is processed to remove the absorbed water content, allowing the desiccant 222 to be reused in the air drying process. In the depicted example, the desiccant 222, such as a liquid desiccant, is pumped (such as via pump 226) through a first heat exchanger 228. The heat exchanger 228 acts to heat the moist desiccant 222 traveling through one portion of the heat exchanger 228 while cooling the dried desiccant 222 traveling through a different portion of the heat exchanger 228. As a result, the moist desiccant leaving the heat exchanger 228 is heated to a temperature of about 150° F (i.e., about 65° C).

In the depicted example, the partially heated desiccant 222 may be further heated in a second heat exchanger 230 which utilizes hot gas turbine exhaust 232 (such as prior to the exhaust gas 232 passing through the HRSG) to further heat the desiccant 222. For example, in one embodiment, the heated desiccant is at a temperature of about 200° F to about 300° F (i.e., about 93° C to about 148° C). The heated desiccant 222 may then be routed through a contactor boiler 236 through which ambient air 240 is passed so as to contact the heated desiccant 222. The ambient air 240 absorbs moisture from the heated desiccant 222 such that the desiccant 222 leaving the contactor boiler 236 is dry, i.e., has little or no moisture content. In one example, the desiccant 222 leaving the contactor boiler 236 is at about 200° F to about 300° F (i.e., about 93° C to about 148° C).

The desiccant 222 may then, in one implementation, be pumped (such as via pump 240) through the heat exchanger 228 discussed above such that the heat of the dried desiccant is used to heat the moist desiccant leaving the air contactor 220. As a result of this heat exchange, the dried desiccant is in turn cooled and exits the heat exchanger 228 at a lower temperature, such as about 100° F (i.e., about 37° C). In one embodiment, the desiccant 222 may be further cooled, such as via a third heat exchanger 242 which uses a coolant 244, such as cooling water from cooling towers, to extract heat from the desiccant 222. In such an embodiment, the desiccant 222 may be at a temperature of about 60° F (i.e., about 15° C) after exiting the heat exchanger 242. The dried and cooled desiccant 222 may then be reused to dry air 120 passing through the air contactor 220.

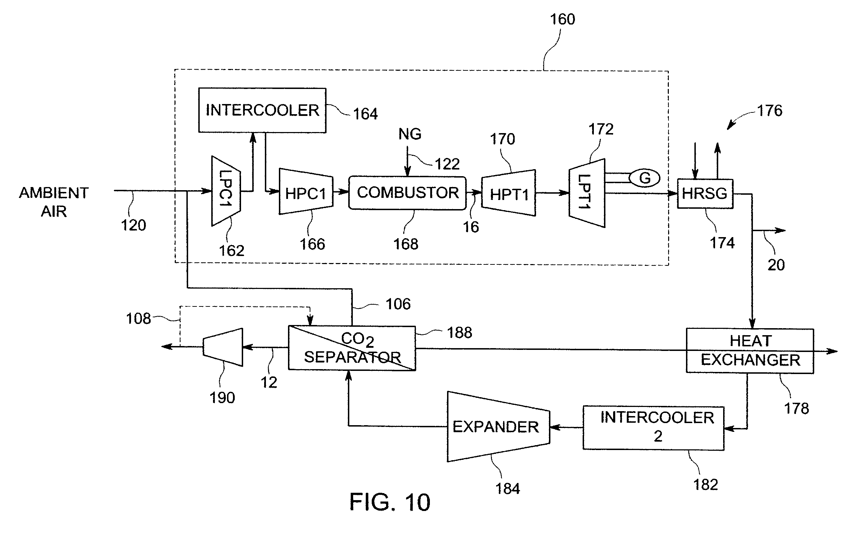

In another embodiment the implementation discussed above with respect to FIG. 7 may be modified such that the system is operated at higher pressure downstream of the gas turbine engine 160. For example, in the depicted embodiment of FIG. 10, air 120 is provided to the gas turbine engine 160 at ambient temperature and pressure for combustion. In this embodiment, the exhaust gas mixture 16 leaving the gas turbine engine 160 is not fully expanded and, as a result, does not need to be compressed downstream. For example, in one such embodiment the gas mixture 16 leaving the gas turbine engine 160 is at a temperature of about 1,100° F (i.e., about 593° C) and at a pressure between 1.1 bar and 10 bar (e.g., 2 bar to 6 bar or 5 bar). At such a temperature and pressure, the steam turbine of the steam cycle 176 (interfaced via the HRSG 174) may operate at a higher efficiency. Further, in one such implementation, the flue gas is kept near or above the triple point of CO₂ so that there is no subsequent flue gas compression step. In one such example, the CO₂ may be subsequently condensed as a liquid instead of a solid due to the flue gas being maintained at a higher pressure.

Upon exiting the HRSG 174, the temperature of the gas mixture 16 is reduced and a portion of the water 20 may drop out as a liquid. The gas mixture 16 may be further cooled upon passage through a heat exchanger 178, which may lower the temperature of the gas mixture 16, thereby forcing some or all of the remaining water 20 out of the gas mixture 16. In the depicted example, the gas mixture 16 is still at pressure (e.g., about 5 bar) and may pass through a second intercooler 182 where the temperature of the gas mixture is lowered. The gas mixture 16 may then undergo an expansion (block 184) where work may be extracted. Upon expansion the gas mixture 16 is sufficiently cool that the CO₂ 12 may be in a liquid or solid phase (depending on the pressure) suitable for separation (block 188) from the gas mixture 16, such as by a suitable separation mechanism (i.e., settling tanks with sweeps, cyclones, and so forth). In one implementation, the separated CO₂ is in a solid phase and is compressed (block 190), such as by a posimetric pump and/or solid compressor, to yield a liquid phase CO₂ product. In other implementations, the gas mixture 16 is at sufficient pressure that the CO₂ 12 is condensed out as a liquid.

Further, as previously discussed, the remaining gas mixture 106, which may be primarily dry N₂, may be used to cool the air inlet of the gas turbine engine 160 or as an input to the gas turbine engine 160 to improve the efficiency of the system and to reduce the formation of NO in the combustion process. In addition, the remaining gas mixture 106 may be used to cool one or more of the heat exchanger components of the system, such as the heat exchanger 178 used to cool the gas mixture 16 upon exiting the HRSG 174.

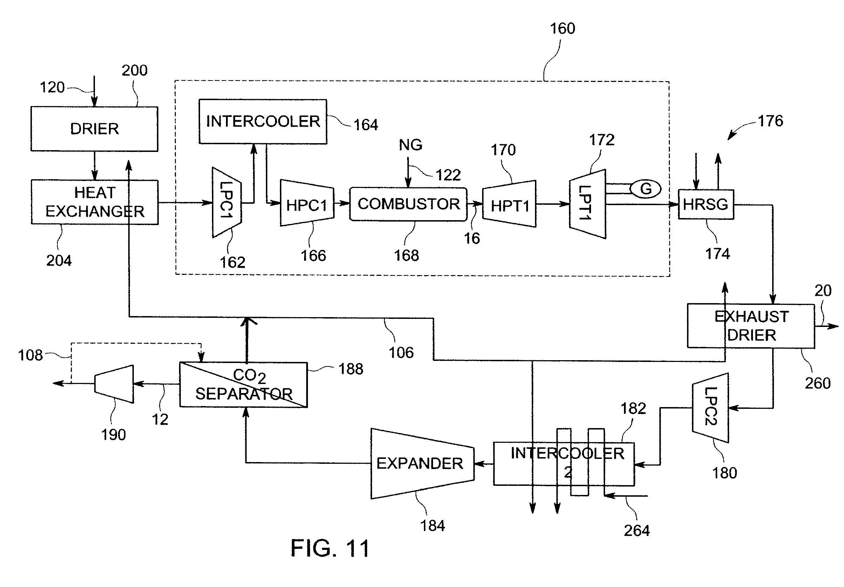

Turning to FIG. 11, in an embodiment where liquefied natural gas (LNG) is available, a regas and air cycle machine may be employed in the system for CO₂ capture. In the depicted embodiment of FIG. 11, the natural gas combined cycle implementation depicted with respect to FIG. 8 is modified to include an exhaust drier 260 (as discussed with respect to FIG. 9) downstream from the HRSG 174 but upstream of the second low pressure compressor 180. In one such implementation, the remaining gas mixture 106 (primarily dry N₂) is at a temperature of about -100° F (i.e., about -74° C) and may be used to cool the second intercooler 182 and/or the exhaust drier 260.

In addition, a liquefied natural gas (LNG) circuit 264 is depicted with respect to the second intercooler 182 which assists in cooling the gas mixture 16 as it passes through the second intercooler 182 and, in the process heating or gasifying the LNG in the circuit 264. For example, in one embodiment, the natural gas (NG) approaches second intercooler 182 in a liquid state, such as at a temperature of about -160° F (i.e., about -106° C). In this example, the liquefied natural gas absorbs heat from the exhaust gas 16 via the interface with the second intercooler 182 and leaves the interface with the second intercooler 184 at a higher temperature and in a gasified state.

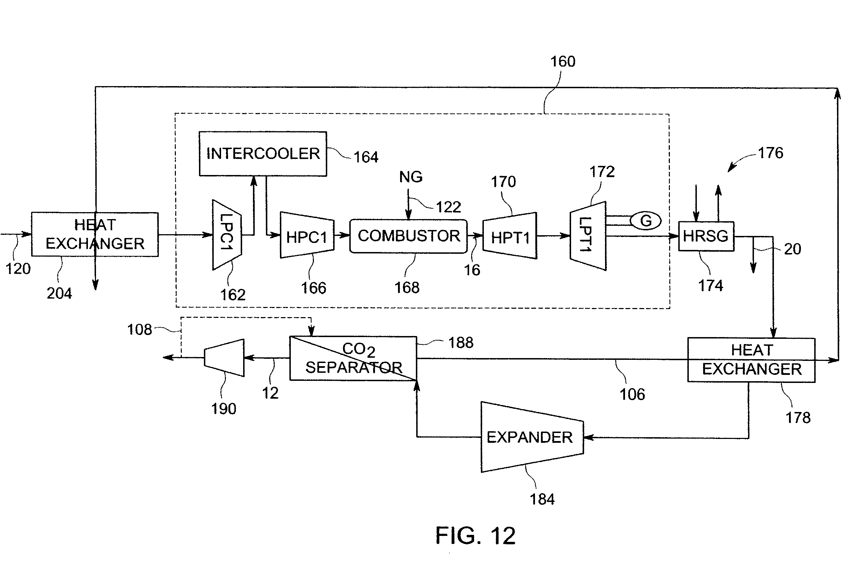

In an additional embodiment, the present approaches to CO₂ capture may be integrated in a combined cycle power generation scheme, as depicted in FIG. 12. In the depicted embodiment, the air 120 is initially cooled prior to entering the gas turbine engine 160, such as via heat exchanger 204, which may be provided as an inlet air cooler in certain implementations. In one such example, the largest volume compressor stages are present in the gas turbine engine 160 portion of the combined cycle.

In the depicted embodiment, the exhaust gas mixture 16 exiting the gas turbine engine 160 is not fully expanded and may, therefore, be at a pressure of about 1.5 bar to about 5 bar when entering the HRSG 174. In one such embodiment, the increased gas turbine exhaust pressure may reduce the volume flow and length of a low swirl burner present in gas turbine engine 160. The gas mixture 16, after exiting the HRSG 174, may pass through a heat exchanger 178, such as an air-to-air heat exchanger, prior to undergoing an expansion step, such as at expander 184. In one embodiment, the temperature of the gas mixture 16 leaving the heat exchanger 178 and entering the expander 184 is less than about 32° F (i.e., about 0° C). As discussed in other embodiments, upon being expanded, the gas mixture 16 may be at a temperature and pressure where the CO₂ is in a solid or liquid form and amenable to separation (block 188) from the gas mixture, such as by mechanical or other suitable approaches. In the depicted embodiment, the remaining gas mixture 106, which may be at about -100° F (i.e., about -73° C) may be used to cool the heat exchanger 178 and/or the heat exchanger 204 (which may form part of the air inlet of the gas turbine engine 160) through which air 120 passes to enter the gas turbine engine 160 and/or to cool one or more of the disclosed intercoolers.

As will be appreciated, the approaches discussed herein may be used in a variety of contexts to capture CO₂, and are not limited to those examples discussed herein. For example, cryogenic processes as discussed herein may be utilized to replace CO₂ (and potentially H₂S) removal in certain types of power production plants, such as a plant based on an integrated gasification combined cycle as may be used to produce power from syngas derived from coal. In such an example, CO₂ may be frozen or condensed on gasification such that the cooled syngas drops out water, CO₂, and H₂S. Likewise, the present approaches may be applied in other contexts to remove CO₂ from exhaust gases or other gas mixtures, regardless of the manner in which the gas mixture is derived or produced.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A power-generating system comprising:
   a CO₂ separation system comprising an inlet that receives a gas mixture generated by a combustion process;
   one or more cooling stages that cool the gas mixture such that solid or liquid-phase CO₂ separate out from the gas mixture to produce a substantially CO₂ free gas mixture; and
   one or more separation components that remove the solid or liquid-phase CO₂ once it is separated from the gas mixture.
2. The power-generating system of clause 1, comprising a pressurizing and heating component that converts solid-phase CO₂ recovered from the gas mixture to liquid-phase CO₂.
3. The power-generating system of clause 1, wherein a heating and pressurizing used to process the CO2 is thermally integrated with one or more of the cooling stages.
4. The power-generating system of clause 1, wherein the pressurizing and heating component comprises a posimetric pump or solid compressor.
5. The power generating system of clause 1, wherein the substantially CO₂ free gas mixture is provided as an input to the combustion process.
6. The power generating system of clause 1, wherein the substantially CO₂ free gas mixture is used to cool one or more air inlets, heat exchangers, or intercoolers associated with the combustion process.
7. The power generating system of clause 1, wherein the substantially CO₂ free gas mixture is used to cool one or more inlets, heat exchangers, or intercoolers associated with the CO₂ separation system.
8. The power generating system of clause 1 comprising a recirculating loop that recycles a portion of the CO₂ removed from the gas mixture back to the CO₂ separation system or the combustion process to increase the efficiency of CO₂ separation from the gas mixture.
9. The power generating system of clause 1, wherein a first portion of the cooled gas mixture is recirculated to the inlet of the combustion process and a second portion of the cooled gas mixture is directed to the one or more separation components.
10. The power generating system of clause 1, wherein the one or more cooling stages cool the gas mixture such that one or more impurities or pollutants are removed from the gas mixture.
11. The power generating system of clause 9, wherein the one or more impurities or pollutants comprise one or more of H₂O, SO₂, NO, NO₂, C₂Hₓ, H₂S, unburnt hydrocarbons (UHC), mercury particulates, and arsenic.
12. A power-generation system, comprising:
   a boiler configured to generate heat;
   one or more cooling stages that cool an exhaust gas exiting the boiler such that one or more constituents of the exhaust gas undergo a phase change and drop out of the exhaust gas, wherein one of the constituents that drop out of the exhaust gas is solid or liquid CO₂; and
   a separation component configured to separate the solid or liquid CO₂ from the exhaust gas, leaving a substantially CO₂ free gas mixture.
13. The power-generation system of clause 12, comprising one or more paths by which the substantially CO₂ free gas mixture is distributed to cool one or more components of the power-generation system.
14. The power-generation system of clause 12, wherein the substantially CO₂ free gas mixture is used to remove heat from condenser heat exchanger of a steam cycle that is heated by the boiler.
15. The power-generation system of clause 12, comprising an expansion component which expands the substantially CO₂ free gas mixture to extract work.
16. The power-generation system of clause 12, comprising a posimetric pump or solid compressor that pressurizes solid CO₂ separated form the exhaust gas to form liquid CO₂.
17. The power-generation system of clause 12, wherein the boiler operates with combustion gasses at high pressure.
18. A combined cycle system, comprising:
   a turbine cycle configured to combust a fuel and air to generate an exhaust gas that passes through one or more turbine components;
   a steam cycle configured to utilize heat of the exhaust gas to cause the flow of water or steam through a circuit; and
   a CO₂ separation system configured to cryogenically separate CO₂ from the exhaust gas to generate a substantially CO₂ free gas mixture.
19. The combined cycle system of clause 18 wherein the exhaust gas exits the turbine cycle at a pressure of 1.1 bar to 10 bar.
20. The combined cycle system of clause 18, comprising wherein the CO₂ is recycled to increase the efficiency by which CO₂ is separated from the exhaust gas.
21. The combined cycle system of clause 18, wherein a first portion of the exhaust gas is recirculated to an inlet of the turbine and a second portion of the exhaust gas is directed to the CO₂ separation system.
22. The combined cycle system of clause 18, comprising one or more air drying systems configured to remove moisture from one or both of the air provided to the turbine cycle or the exhaust gas.
23. The combined cycle system of clause 18, comprising one or more air inlets, heat exchangers, or intercoolers cooled by the substantially CO₂ free gas mixture.
24. The combined cycle system, of clause 18, wherein the substantially CO₂ free gas mixture is used to remove heat from the steam cycle.

## Claims

1. A power-generating system comprising:
a CO₂ separation system comprising an inlet that receives a gas mixture (16) generated by a combustion process;
one or more cooling stages (84, 90) that cool the gas mixture (16) such that solid or liquid-phase CO₂ (12) separate out from the gas mixture (16) to produce a substantially CO₂ free gas mixture (106); and
one or more separation components that remove the solid or liquid-phase CO₂ (12) once it is separated from the gas mixture (16).

2. The power-generating system of claim 1, comprising a pressurizing and heating component (100) that converts solid-phase CO₂ recovered from the gas mixture (16) to liquid-phase CO₂.

3. The power-generating system of claim 1 or 2, wherein a heating and pressurizing used to process the CO2 is thermally integrated with one or more of the cooling stages.

4. The power-generating system of any of the preceding claims, wherein the pressurizing and heating component comprises a posimetric pump or solid compressor.

5. The power generating system of any of the preceding claims, wherein the substantially CO₂ free gas mixture (106) is provided as an input to the combustion process.

6. The power generating system of any of the preceding claims, wherein the substantially CO₂ free gas mixture (106) is used to cool one or more air inlets, heat exchangers (136, 174, 204), or intercoolers associated with the combustion process.

7. The power generating system of any of the preceding claims, wherein the substantially CO₂ free gas mixture (106) is used to cool one or more inlets, heat exchangers (128, 174, 178) or intercoolers (182) associated with the CO₂ separation system.

8. The power generating system of any of the preceding claims, comprising a recirculating loop (108) that recycles a portion of the CO₂ (12) removed from the gas mixture (16) back to the CO₂ separation system or the combustion process to increase the efficiency of CO₂ separation from the gas mixture (16).

9. The power generating system of any of the preceding claims, wherein a first portion of the cooled gas mixture is recirculated to the inlet of the combustion process and a second portion of the cooled gas mixture is directed to the one or more separation components.

10. The power generating system of any of the preceding claims, wherein the one or more cooling stages cool the gas mixture (16) such that one or more impurities or pollutants (14) are removed from the gas mixture (16).

11. The power generating system of claim 9, wherein the one or more impurities or pollutants comprise one or more of H₂O, SO₂, NO, NO₂, C₂Hₓ, H₂S, unburnt hydrocarbons (UHC), mercury particulates, and arsenic.
